# EUROPEAN PATENT APPLICATION

(11) **EP 3 916 684 A1**
(43) Date of publication of application: **01.12.2021**
(21) Application number: 20702508.1
(22) Date of filing: 02.01.2020
(51) Int. Cl.: G07C 5/08, B62J 27/00

(54) **CONTROL DEVICE AND CONTROL METHOD**

(30) Priority: 23.01.2019 JP 2019008863
(71) Applicant: Robert Bosch GmbH, 70442 Stuttgart (DE)
(72) Inventor: HATTORI, Takayuki, Yokohama-shi, Kanagawa 224-8501 (JP); YAMADA, Yasuo, Yokohama-shi, Kanagawa 224-8501 (JP)
(74) Representative: Isarpatent
(86) International application number: PCT/IB2020/050005
(87) International publication number: WO 2020/152535

(57) **Abstract**

[Problem] The present invention obtains a controller and a control method capable of appropriately recording desired information in a recording unit of a straddle-type vehicle. [Means for Resolution] In the controller and the control method according to the present invention, recording of information by a recording processor is controlled, the recording processor continuously acquires target information as a recording target and can execute event data recording for recording partial information, which is information acquired in a period including a shock application time at which the straddle-type vehicle receives a shock, of the target information as event data. In addition, selection of whether to prohibit or permit the event data recording is made in the case where it is determined that the straddle-type vehicle is brought into an off-ground state where a wheel of the straddle-type vehicle comes off the ground.

## Description

### Technical Field

The present disclosure relates to a controller and a control method capable of appropriately recording desired information in a recording unit of a straddle-type vehicle.

### Background Art

Conventionally, in order to primarily analyze a situation during a traffic accident ex-post facto, a technique of mounting a recording unit, which includes a recording processor for recording information relevant to the accident among acquired information on a vehicle, to the vehicle has been known. As such a technique, as described in PTL 1, a technique of applying the recording processor, which can record output from various types of equipment mounted to the vehicle, to a straddle-type vehicle such as a motorcycle has been available (for example, see PTL 1).

Note that, in the present specification, recording of the information means that the information is saved in a state where the information cannot basically be overwritten (for example, a state where the information is not overwritten unless a user performs a specified operation) or a state where deletion thereof is restricted.

### Citation List

### Patent Literature

PTL 1: JP-A-2013-041356

### Summary of Invention

### Technical Problem

More specifically, the above-described recording processor continuously acquires target information as a recording target and can execute event data recording for recording partial information, which is information acquired in a period including a shock application time at which the vehicle receives the shock, of the target information as event data. More specifically, such event data recording is executed when it is determined that the vehicle has received the shock.

By the way, unlike the vehicle other than the straddle-type vehicle, the straddle-type vehicle is possibly brought into an off-ground state (that is, a state where a wheel (s) comes off the ground) when jumping, making a wheelie, or the like by a rider's intentional operation. In this case, the straddle-type vehicle receives the shock when being resumed from the off-ground state (that is, when the off-ground wheel contacts the ground again) . As a result, the event data recording is unintentionally executed, and the information irrelevant to the accident is possibly recorded as event data. Thus, capacity of a storage area, which is used for the event data recording, in a storage device is unnecessarily filled, and it may become difficult to appropriately record information desired to be properly recorded.

The present invention has been made with the above-described problem as the background and therefore obtains a controller and a control method capable of appropriately recording desired information in a recording unit of a straddle-type vehicle.

### Solution to Problem

A controller according to the present invention is a controller for controlling recording of information by a recording processor of a straddle-type vehicle. The recording processor continuously acquires target information as a recording target and can execute event data recording for recording partial information, which is information acquired in a period including a shock application time at which the straddle-type vehicle receives a shock, of the target information as event data. The controller includes a control section that selects whether to prohibit or permit the event data recording when it is determined that the straddle-type vehicle is brought into an off-ground state where a wheel of the straddle-type vehicle comes off the ground.

A control method according to the present invention is a control method for controlling recording of information by a recording processor of a straddle-type vehicle using a controller. The recording processor continuously acquires target information as a recording target and can execute event data recording for recording partial information, which is information acquired in a period including a shock application time at which the straddle-type vehicle receives a shock, of the target information as event data. In the control method, a control section in the controller selects whether to prohibit or permit the event data recording when it is determined that the straddle-type vehicle is brought into an off-ground state where a wheel of the straddle-type vehicle comes off the ground. Advantageous Effects of Invention

In the controller and the control method according to the present invention, recording of the information by the recording processor is controlled, and the recording processor continuously acquires the target information as the recording target and can execute the event data recording for recording the partial information, which is the information acquired in the period including the shock application time at which the straddle-type vehicle receives the shock, of the target information as the event data. In addition, selection of whether to prohibit or permit the event data recording is made when it is determined that the straddle-type vehicle is brought into the off-ground state where the wheel of the straddle-type vehicle comes off the ground. In this way, it is possible to suppress unintentional execution of the event data recording with the shock, which occurs when the straddle-type vehicle is resumed from the off-ground state after being in the off-ground state, as the trigger. As a result, it is possible to suppress capacity of a storage area, which is used for the event data recording, in a storage device from being unnecessarily filled. Therefore, desired information can appropriately be recorded in the recording unit of the straddle-type vehicle.

### Brief Description of Drawings

Fig. 1 is a schematic view of a configuration of a motorcycle to which a controller according to an embodiment of the present invention is mounted.
Fig. 2 is an explanatory view for illustrating a lean angle of the motorcycle.
Fig. 3 is a block diagram of exemplary configurations of the controller and a recording unit according to the embodiment of the present invention.
Fig. 4 is a flowchart of a first example of a processing procedure that is executed by the controller and a recording processor according to the embodiment of the present invention.
Fig. 5 is a flowchart of a second example of the processing procedure that is executed by the controller and the recording processor according to the embodiment of the present invention.
Fig. 6 is a flowchart of a third example of the processing procedure that is executed by the controller and the recording processor according to the embodiment of the present invention.

### Description of Embodiments

A description will hereinafter be made on a controller according to the present invention with reference to the drawings.

Hereinafter, a description will be made on the controller used for a two-wheeled motorcycle. However, the controller according to the present invention may be used for a straddle-type vehicle other than the two-wheeled motorcycle (for example, a three-wheeled motorcycle, an all-terrain vehicle, a bicycle, or the like). The straddle-type vehicle means a vehicle that a driver straddles.

In addition, a description will hereinafter be made on a case where, as target information as a recording target, an image captured by a camera mounted to the motorcycle is acquired by a recording processor. However, the recording processor may acquire, as the target information, output from various types of equipment mounted to the motorcycle.

Furthermore, a description will hereinafter be made on a case where a controller 30 corresponding to an example of the controller according to the present invention is mounted on the outside of a recording unit 60. However, the controller 30 may be mounted in the recording unit 60. For example, a recording processor 61 in the recording unit 60 may have a function of the controller 30.

Moreover, a description will hereinafter be made on a case where an engine is used as a drive source of the motorcycle. However, as the drive source of the motorcycle, a drive source other than the engine (for example, a motor) may be used, or multiple drive sources may be used.

A configuration, operation, and the like, which will be described below, merely constitute one example. The controller and the control method according to the present invention are not limited to a case with such a configuration, such operation, and the like.

The same or similar description will appropriately be simplified or will not be made below. In the drawings, the same or similar members or portions will not be denoted by a reference sign or will be denoted by the same reference sign. In addition, a detailed structure will appropriately be illustrated in a simplified manner or will not be illustrated.

### <Configuration of Motorcycle>

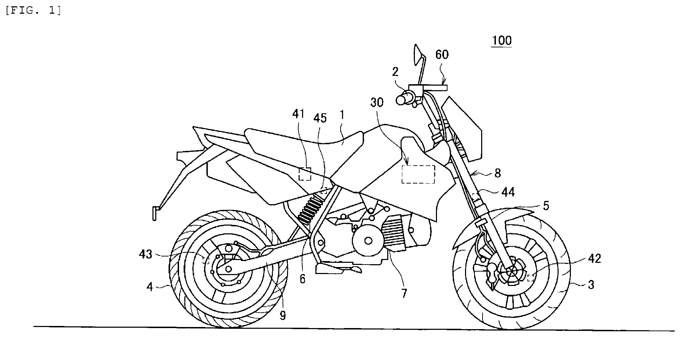

A description will be made on a configuration of a motorcycle 100 to which the controller 30 according to an embodiment of the present invention is mounted with reference to Fig. 1 to Fig. 3.

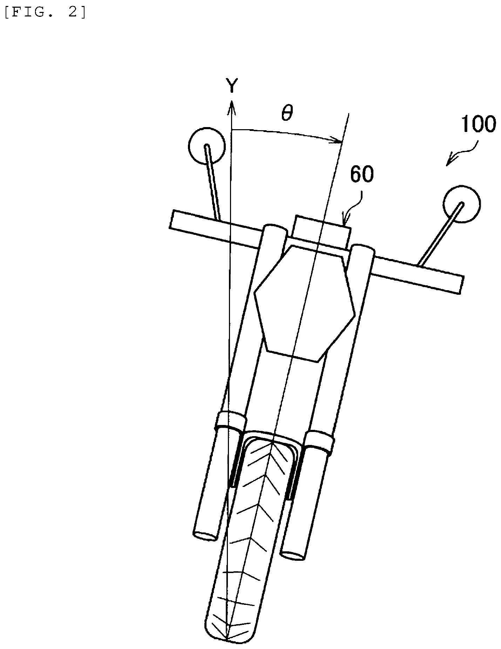

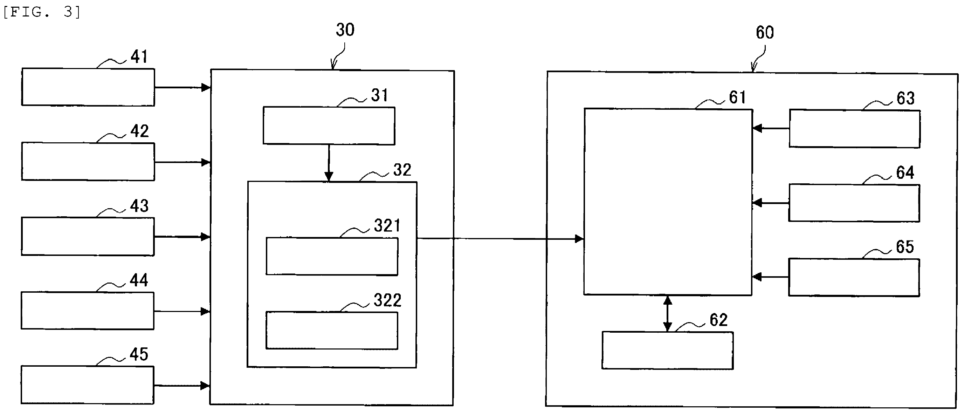

Fig. 1 is a schematic view of a configuration of the motorcycle 100 to which the controller 30 is mounted. Fig. 2 is an explanatory view for illustrating a lean angle of the motorcycle 100. Fig. 3 is a block diagram of exemplary configurations of the controller 30 and the recording unit 60.

As illustrated in Fig. 1, the motorcycle 100 includes: a trunk 1; a handlebar 2 that is held by the trunk 1 in a freely turnable manner; a front wheel 3 that is held by the trunk 1 in the freely turnable manner with the handlebar 2; a rear wheel 4 that is held by the trunk 1 in a freely rotatable manner; a front suspension 5; a rear suspension 6; an engine 7, the controller (ECU) 30; and the recording unit 60. The motorcycle 100 also includes an inertial measurement unit (IMU) 41, a front-wheel rotational frequency sensor 42, a rear-wheel rotational frequency sensor 43, a front stroke sensor 44, and a rear stroke sensor 45.

Each of the front suspension 5 and the rear suspension 6 is interposed between the trunk 1 and the wheel. More specifically, the front suspension 5 is provided to a front fork 8 that connects the handlebar 2 and the front wheel 3, and is extendable/contractable along an axial direction of the front suspension 5. The rear suspension 6 connects the trunk 1 and a swing arm 9 that is swingably supported by the trunk 1 and holds the rear wheel 4 in a freely turnable manner, and is extendable/contractable along an axial direction of the rear suspension 6.

The engine 7 outputs power for driving the wheel. For example, the engine 7 is provided with: one or multiple cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause rotation of a crankshaft. A throttle valve is provided in an intake pipe of the engine 7, and an intake air amount for the combustion chamber varies in accordance with a throttle opening amount as an opening degree of the throttle valve. Note that the power output from the engine 7 may be transmitted only to the rear wheel 4 or may be transmitted to both of the front wheel 3 and the rear wheel 4.

The inertial measurement unit 41 includes a three-axis gyroscope sensor and a three-directional acceleration sensor, and is provided to the trunk 1, for example.

For example, the inertial measurement unit 41 detects the lean angle of the motorcycle 100, and outputs a detection result. The inertial measurement unit 41 may detect another physical quantity that can substantially be converted to the lean angle of the motorcycle 100. For example, as illustrated in Fig. 2, the lean angle corresponds to an angle θ that represents a tilt of the motorcycle 100 in a rolling direction with respect to a vertical direction Y. Hereinafter, a description will be made on that the lean angle obtains a positive value when the motorcycle 100 is tilted in either direction of a vehicle right-left direction.

The front-wheel rotational frequency sensor 42 detects a rotational frequency of the front wheel 3 and outputs a detection result. The front-wheel rotational frequency sensor 42 may detect another physical quantity that can substantially be converted to the rotational frequency of the front wheel 3. The front-wheel rotational frequency sensor 42 is provided to the front wheel 3, for example.

The rear-wheel rotational frequency sensor 43 detects a rotational frequency of the rear wheel 4 and outputs a detection result. The rear-wheel rotational frequency sensor 43 may detect another physical quantity that can substantially be converted to the rotational frequency of the rear wheel 4. The rear-wheel rotational frequency sensor 43 is provided to the rear wheel 4, for example.

The front stroke sensor 44 detects a stroke amount of the front suspension 5 and outputs a detection result. The front stroke sensor 44 may detect another physical quantity that can substantially be converted to the stroke amount of the front suspension 5. The front stroke sensor 44 is provided to the front suspension 5, for example.

The rear stroke sensor 45 detects a stroke amount of the rear suspension 6 and outputs a detection result. The rear stroke sensor 45 may detect another physical quantity that can substantially be converted to the stroke amount of the rear suspension 6. The rear stroke sensor 45 is provided to the rear suspension 6, for example.

The recording unit 60 is used to record information on travel of the motorcycle 100. More specifically, the recording unit 60 is provided to mainly record information relevant to an accident, and such information is used to analyze a situation during a traffic accident ex-post facto. Further in detail, as will be described later, the recording unit 60 can record an image in front of the motorcycle 100 and corresponds to a so-called dashboard camera.

As illustrated in Fig. 3, for example, the recording unit 60 includes the recording processor 61, a storage device 62 capable of communicating with the recording processor 61, a camera 63 mounted to the motorcycle 100, a microphone 64 mounted to the motorcycle 100, and an acceleration sensor 65 detecting acceleration of the motorcycle 100. For example, the camera 63 includes: an image capturing device such as a complementary metal-oxide-semiconductor (CMOS) image sensor; and an image processor such as an image signal processor (ISP). The information detected by the camera 63, the microphone 64, and the acceleration sensor 65 is output to the recording processor 61. Such a recording unit 60 is provided at a center of an upper portion of the handlebar 2 in the vehicle right-left direction, for example.

The recording processor 61 can continuously acquire the target information as the recording target and can record a specific part of the target information (that is, execute processing to store the specific part in the storage device 62) .

More specifically, the recording processor 61 continuously acquires the image captured by the camera 63, which is mounted to the motorcycle 100, as the target information. For example, the camera 63 is provided to face forward, and thus the image in front of the motorcycle 100 is captured by the camera 63. The recording processor 61 constantly executes processing to store the image as the acquired target information in the storage device 62. Here, the recording processor 61 may subject the image acquired from the camera 63 into image processing such as compression processing and thereafter store the image in the storage device 62. In this case, the recording processor 61 may have a function of temporarily storing the image for the image processing. The recording processor 61 may link voice information detected by the microphone 64 to the image captured by the camera 63 and constantly store the voice information and the image in the storage device 62. Here, of data (that is, the image or a video in which the voice information and the image are linked) stored in the storage device 62, the oldest data is overwritten with the latest data.

The recording processor 61 can execute event data recording for recording partial information, which is the information acquired in a period including a shock application time at which the motorcycle 100 receives a shock, of the target information (more specifically, the image captured by the camera 63) as event data. The event data corresponds to the information relevant to the accident. For example, as the period including the shock application time, a period of approximately 20 seconds between a time point before the shock application time and a time point after the shock application time is used. Here, a start point and an end point of the period including the shock application time can appropriately be set. More specifically, the recording processor 61 determines whether the motorcycle 100 receives the shock by using the detection result of the acceleration sensor 65, and executes the event data recording when determining that the motorcycle 100 receives the shock. Thus, the event data recording is executed, for example, when the motorcycle 100 collides with a vehicle or the like, when the motorcycle 100 is abruptly braked, or the like.

As described above, recording of the information means that the information is saved in a state where the information cannot basically be overwritten (for example, a state where the information is not overwritten unless a user performs a specified operation) or in a state where deletion thereof is restricted. That is, when the event data recording is executed, the partial information, which is acquired in the period including the shock application time, of the target information is saved in the state where the information cannot basically be overwritten or the state where the deletion thereof is restricted.

For example, in addition to a storage area, which is used to constantly store the image as the acquired target information (hereinafter also referred to as constant storage), in the storage device 62, a storage area, which is used for the event data recording, in the storage device 62 is prepared, and the event data is saved in such a storage area. Here, the storage area used for the constant storage and the storage area used for the event data recording may separately be prepared in the storage device 62. Alternatively, as the storage device 62, separate storage devices may be prepared for the constant storage and the event data recording, so as to separate the storage area used for the constant storage from the storage area used for the event data recording. However, the storage area used commonly for both of the constant storage and the event data recording may be prepared in the storage device 62.

The controller 30 controls recording of the information by the recording processor 61 in the recording unit 60.

For example, the controller 30 is partially or entirely constructed of a microcomputer, a microprocessor unit, or the like. In addition, the controller 30 may partially or entirely be constructed of a member which can be updated, such as firmware, or may partially or entirely be a program module or the like that is executed by a command from a CPU or the like, for example. The controller 30 may be provided as one unit or may be divided into multiple units, for example. The controller 30 is attached to the trunk 1, for example.

As illustrated in Fig. 3, the controller 30 includes an acquisition section 31 and a control section 32, for example.

The acquisition section 31 acquires the information that is output from each of the devices mounted to the motorcycle 100, and outputs the acquired information to the control section 32. For example, the acquisition section 31 acquires the information output from the inertial measurement unit 41, the front-wheel rotational frequency sensor 42, the rear-wheel rotational frequency sensor 43, the front stroke sensor 44, and the rear stroke sensor 45.

The control section 32 uses the information output from the acquisition section 31 to control recording of the information by the recording processor 61. The control section 32 includes a recording control section 321 and a determination section 322, for example.

The recording control section 321 outputs a control command for controlling recording of the information by the recording processor 61 to the recording processor 61 in the recording unit 60. In this way, recording of the information by the recording processor 61 is controlled.

For example, the recording control section 321 prohibits or permits the event data recording by the recording processor 61. More specifically, the recording control section 321 outputs a control command indicative of prohibition of the event data recording to the recording processor 61 and thereby prohibits the event data recording by the recording processor 61. The recording control section 321 outputs a control command indicative of permission of the event data recording to the recording processor 61 and thereby permits the event data recording by the recording processor 61.

Here, in the case where it is determined that the motorcycle 100 is in an off-ground state where the wheel of the motorcycle 100 comes off the ground, the recording control section 321 selects whether to prohibit or permit the event data recording. In the case where the event data recording is prohibited, the motorcycle 100 is brought into a state where the event data recording is not executed even when it is determined that the motorcycle 100 receives the shock. In the case where it is not determined that the motorcycle 100 is in the off-ground state and it is not selected whether to prohibit or permit the event data recording, the event data recording is permitted. Accordingly, the motorcycle 100 is brought into a state where the event data recording is executed with the determination that the motorcycle 100 receives the shock as a trigger.

The determination section 322 makes various determinations by using the information output from the acquisition section 31. A determination result by the determination section 322 is used for processing executed by the recording control section 321.

As described above, in the controller 30, in the case where it is determined that the motorcycle 100 is in the off-ground state where the wheel of the motorcycle 100 comes off the ground, the control section 32 selects whether to prohibit or permit the event data recording. In this way, desired information is appropriately recorded in the recording unit 60 of the motorcycle 100. The processing that is related to such event data recording and is executed by the control section 32 will be described later in detail.

### <Operation of Controller and Recording Processor>

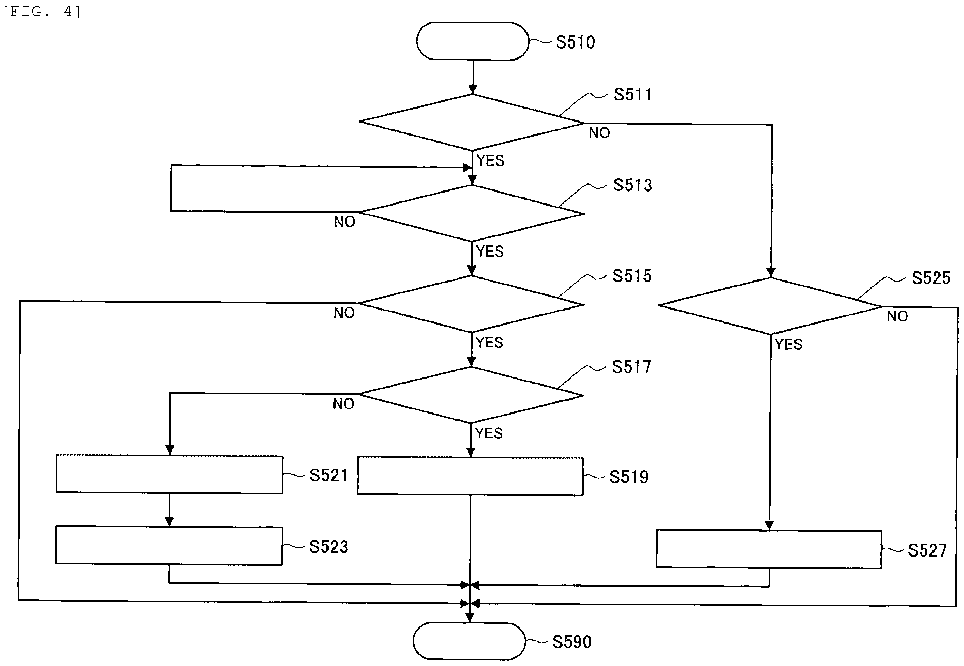

A description will be made on operation of the controller 30 and the recording processor 61 according to the embodiment of the present invention with reference to Fig. 4 to Fig. 6. More specifically, as examples of a processing procedure executed by the controller 30 and the recording processor 61, a description will hereinafter be made on a first example, a second example, and a third example in this order.

Fig. 4 is a flowchart of the first example of the processing procedure that is executed by the controller 30 and the recording processor 61. More specifically, a control flow according to the first example illustrated in Fig. 4 corresponds to the processing procedure that is related to the event data recording and is executed by the controller 30 and the recording processor 61, and is repeatedly executed during activation of the recording unit 60 (that is, in a period between activation and a stop of the recording unit 60). Here, during the activation of the recording unit 60, the constant storage for constantly storing the image as the acquired target information is basically and constantly executed. Note that, for example, the recording unit 60 may be activated or stopped according to the user's operation using an input device such as a button of the recording unit 60, or may be activated or stopped according to the user's operation using an ignition switch.

In addition, step S510 and step S590 in Fig. 4 respectively correspond to initiation and termination of the control flow according to the first example illustrated in Fig. 4. The control flow according to the first example illustrated in Fig. 4 is initiated in the state where the recording control section 321 in the controller 30 permits the event data recording by the recording processor 61.

When the control flow according to the first example illustrated in Fig. 4 is initiated, in step S511, the determination section 322 in the controller 30 determines whether the motorcycle 100 is brought into the off-ground state. If it is determined that the motorcycle 100 is brought into the off-ground state (step S511/YES), the processing proceeds to step S513. On the other hand, if it is not determined that the motorcycle 100 is brought into the off-ground state (step S511/NO), the processing proceeds to step S525.

The off-ground state is the state where the wheel of the motorcycle 100 comes off the ground, and includes a jumping state where both of the wheels of the motorcycle 100 come off the ground and a one-wheel floating state where one of the wheels of the motorcycle 100 contacts the ground while the other wheel comes off the ground. Here, the one-wheel floating state includes a wheelie state where the rear wheel 4 of the motorcycle 100 contacts the ground while the front wheel 3 thereof comes off the ground and a stoppie state where the front wheel 3 of the motorcycle 100 contacts the ground while the rear wheel 4 thereof comes off the ground.

For example, when determining that the motorcycle 100 is brought into the jumping state where both of the wheels of the motorcycle 100 come off the ground, the determination section 322 determines that the motorcycle 100 is brought into the off-ground state.

Here, the determination section 322 can determine whether the motorcycle 100 is brought into the jumping state by various methods. For example, the determination section 322 uses the detection results of the front stroke sensor 44 and the rear stroke sensor 45 and thus can determine whether the motorcycle 100 is brought into the jumping state on the basis of the stroke amount of the front suspension 5 and the stroke amount of the rear suspension 6. In addition, for example, the determination section 322 uses the detection results of the front-wheel rotational frequency sensor 42 and the rear-wheel rotational frequency sensor 43 and thus can determine whether the motorcycle 100 is brought into the jumping state on the basis of a difference between the rotational frequency of the front wheel 3 and the rotational frequency of the rear wheel 4. Furthermore, for example, the determination section 322 can determine whether the motorcycle 100 is brought into the jumping state on the basis of the detection result of the inertial measurement unit 41. Just as described, when determining whether the motorcycle 100 is brought into the jumping state, the determination section 322 may use the detection result of any of the sensors 41, 42, 43, 44, and 45 mounted to the motorcycle 100 or may use a detection result of a combination of sensors other than the sensors 41, 42, 43, 44, and 45.

Alternatively, for example, when determining that the motorcycle 100 is brought into the one-wheel floating state (more specifically, the wheelie state or the stoppie state) where one of the wheels of the motorcycle 100 contacts the ground while the other wheel comes off the ground, the determination section 322 determines that the motorcycle 100 is brought into the off-ground state.

Here, the determination section 322 can determine whether the motorcycle 100 is brought into the one-wheel floating state by various methods. For example, the determination section 322 uses the detection results of the front stroke sensor 44 and the rear stroke sensor 45 and thus can determine whether the motorcycle 100 is brought into the one-wheel floating state on the basis of the stroke amount of the front suspension 5 and the stroke amount of the rear suspension 6. In addition, for example, the determination section 322 uses the detection results of the front-wheel rotational frequency sensor 42 and the rear-wheel rotational frequency sensor 43 and thus can determine whether the motorcycle 100 is brought into the one-wheel floating state on the basis of the difference between the rotational frequency of the front wheel 3 and the rotational frequency of the rear wheel 4. Furthermore, for example, the determination section 322 can determine whether the motorcycle 100 is brought into the one-wheel floating state on the basis of the detection result of the inertial measurement unit 41. Just as described, when determining whether the motorcycle 100 is brought into the one-wheel floating state, the determination section 322 may use the detection result of any of the sensors 41, 42, 43, 44, and 45 mounted to the motorcycle 100 or may use the detection result of the combination of sensors other than the sensors 41, 42, 43, 44, and 45.

If it is determined YES in step S511, in step S513, the determination section 322 in the controller 30 determines whether the motorcycle 100 is resumed from the off-ground state (that is, whether the off-ground wheel comes into contact with the ground) . If it is determined that the motorcycle 100 is resumed from the off-ground state (step S513/YES), the processing proceeds to step S515. On the other hand, if it is not determined that the motorcycle 100 is resumed from the off-ground state (step S513/NO), the processing in step S513 is repeated.

For example, the determination section 322 can determine whether the motorcycle 100 is resumed from the off-ground state on the basis of the detection result of the inertial measurement unit 41.

If it is determined YES in step S513, in step S515, the recording processor 61 determines whether the motorcycle 100 has received the shock. If it is determined that the motorcycle 100 has received the shock (step S515/YES), the processing proceeds to step S517. On the other hand, if it is determined that the motorcycle 100 has not received the shock (step S515/NO), the control flow illustrated in Fig. 4 is terminated.

For example, the recording processor 61 determines that the motorcycle 100 has received the shock in the case where the acceleration of the motorcycle 100 exceeds reference acceleration at the time of the resumption from the off-ground state. The reference acceleration is set to a value with which it is possible to appropriately determine whether the motorcycle 100 has received such a magnitude of an impact force that can be assumed when the accident or a possibility of the accident occurs.

When the motorcycle 100 is resumed from the off-ground state, the motorcycle 100 receives a relatively large impact force due to a gravitational force applied to the motorcycle 100. Thus, in step S515, it is basically determined YES.

If it is determined YES in step S515, in step S517, the determination section 322 in the controller 30 determines whether the motorcycle 100 has succeeded in being resumed from the off-ground state. If it is determined that the motorcycle 100 has succeeded in being resumed from the off-ground state (step S517/YES), the processing proceeds to step S519. On the other hand, if it is determined that the motorcycle 100 has failed in being resumed from the off-ground state (step S517/NO), the processing proceeds to step S521.

For example, the determination section 322 can determine whether the motorcycle 100 has succeeded in being resumed from the off-ground state on the basis of the detection result of the inertial measurement unit 41. More specifically, in the case where the determination section 322 determines that the motorcycle 100 has fallen in a rolling direction after being resumed from the off-ground state on the basis of the lean angle of the motorcycle 100 detected by the inertial measurement unit 41, the determination section 322 can determine that the motorcycle 100 has failed in being resumed from the off-ground state. When determining whether the motorcycle 100 has succeeded in being resumed from the off-ground state, the determination section 322 may use the detection result of at least one of the sensors 42, 43, 44, and 45 other than the inertial measurement unit 41 among the sensors 41, 42, 43, 44, and 45 mounted to the motorcycle 100.

If it is determined YES in step S517, in step S519, the recording control section 321 in the controller 30 prohibits the event data recording by the recording processor 61. In this way, it is possible to appropriately suppress the unintentional execution of the event data recording with the shock, which occurs when the motorcycle 100 is resumed from the off-ground state after being brought into the off-ground state, as a trigger.

Next, the control flow illustrated in Fig. 4 is terminated.

If it is determined NO in step S517, in step S521, the recording control section 321 in the controller 30 permits the event data recording by the recording processor 61. In this way, the motorcycle 100 is brought into the state where the event data recording is executed with the determination that the motorcycle 100 receives the shock as the trigger.

Next, the recording processor 61 executes the event data recording. In this way, the partial information, which is the information acquired in the period including the shock application time at which the motorcycle 100 receives the shock, of the image captured by the camera 63 as the target information is recorded as the event data.

Next, the control flow illustrated in Fig. 4 is terminated.

If it is determined NO in step S511, in step S525, similar to step S515, the recording processor 61 determines whether the motorcycle 100 has received the shock. If it is determined that the motorcycle 100 has received the shock (step S525/YES), the processing proceeds to step S527. On the other hand, if it is determined that the motorcycle 100 has not received the shock (step S525/NO), the control flow illustrated in Fig. 4 is terminated.

If it is determined YES in step S525, in step S527, the recording processor 61 executes the event data recording. In this way, the partial information, which is the information acquired in the period including the shock application time at which the motorcycle 100 receives the shock, of the image captured by the camera 63 as the target information is recorded as the event data.

As described above, the control flow illustrated in Fig. 4 is initiated in the state where the recording control section 321 in the controller 30 permits the event data recording by the recording processor 61. Thus, in the case where it is determined in step S525 that the motorcycle 100 has received the shock, as described above, the event data recording is executed in step S527.

Next, the control flow illustrated in Fig. 4 is terminated.

As described above, in the control flow illustrated in Fig. 4, in the case where it is determined that the motorcycle 100 is in the off-ground state where the wheel of the motorcycle 100 comes off the ground, the control section 32 selects whether to prohibit or permit the event data recording. More specifically, in the control flow illustrated in Fig. 4, upon making the above selection, the control section 32 prohibits the event data recording when it is determined that the resumption from the off-ground state is succeeded, and permits the event data recording when it is determined that the resumption from the off-ground state is failed.

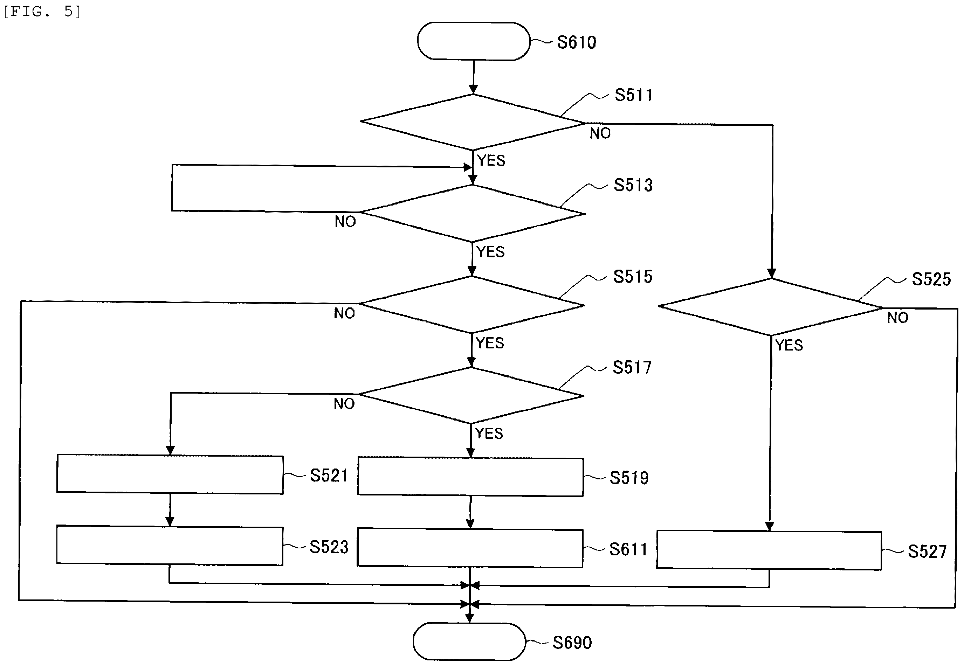

Fig. 5 is a flowchart of a second example of the processing procedure that is executed by the controller 30 and the recording processor 61. More specifically, similar to the control flow according to the above-described first example, a control flow according to the second example illustrated in Fig. 5 corresponds to the processing procedure that is related to the event data recording and is executed by the controller 30 and the recording processor 61, and is repeatedly executed during the activation of the recording unit 60.

In addition, step S610 and step S690 in Fig. 5 respectively correspond to initiation and termination of the control flow according to the second example illustrated in Fig. 5. Similar to the control flow according to the above-described first example, the control flow according to the second example illustrated in Fig. 5 is initiated in the state where the recording control section 321 in the controller 30 permits the event data recording by the recording processor 61.

The control flow according to the second example differs from the control flow according to the above-described first example in a point that, after it is determined YES in step S517 and the processing in step S519 is executed, processing in step S611 is further executed.

More specifically, in the control flow according to the second example illustrated in Fig. 5, in the case where it is determined that the motorcycle 100 has succeeded in being resumed from the off-ground state (step S517/YES), in step S519, the recording control section 321 in the controller 30 prohibits the event data recording by the recording processor 61.

Next, in step S611, the recording control section 321 in the controller 30 applies a resumption success flag, which is a flag indicative of success in resumption, to the target information. The resumption success flag is information used to search for the image relevant to the off-ground state, from which the motorcycle 100 has succeeded in being resumed, among the images captured by the camera 63 and stored as the target information in the storage device 62. More specifically, the recording control section 321 controls the operation of the recording processor 61, so as to be able to apply the resumption success flag to the target information.

More specifically, among the images captured by the camera 63 and stored as the target information in the storage device 62, the resumption success flag is applied to the image acquired at timing corresponding to timing at which the motorcycle 100 is resumed from the off-ground state (for example, resumption timing from the off-ground state, a time point before the resumption timing, a time point after the resumption timing, or a period including the resumption timing). Accordingly, by searching for the image, to which the resumption success flag is applied, among the images stored in the storage device 62, the user can browse the image relevant to the off-ground state, from which the motorcycle 100 has succeeded in being resumed.

As described above, in the control flow illustrated in Fig. 5, upon the selection of whether to prohibit or permit the event data recording, the control section 32 applies the resumption success flag, which is the flag indicative of the success in the resumption, to the target information in the case where it is determined that the resumption from the off-ground state is succeeded.

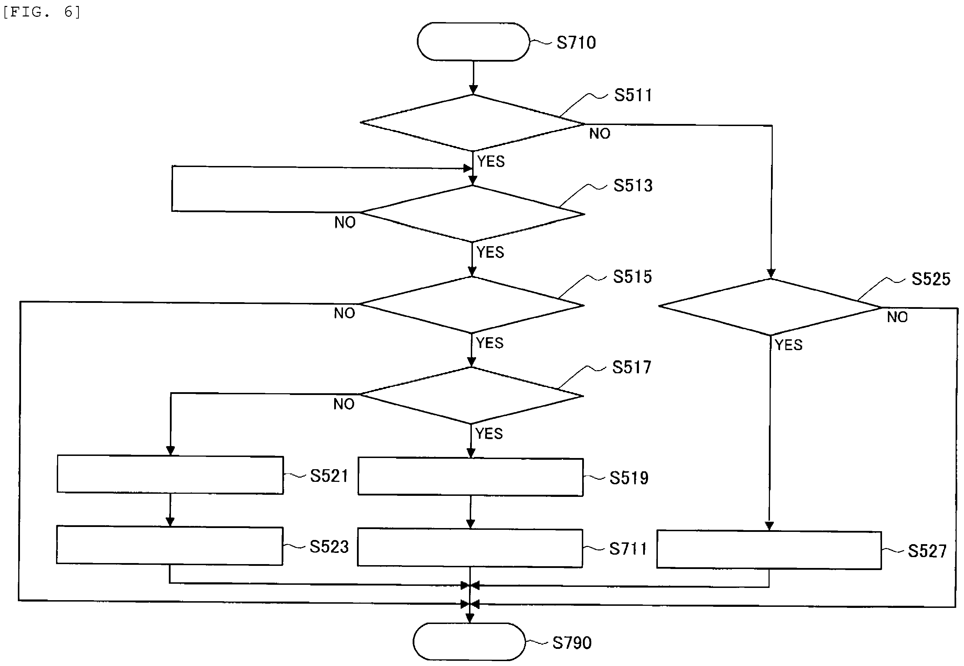

Fig. 6 is a flowchart of a third example of the processing procedure that is executed by the controller 30 and the recording processor 61. More specifically, similar to the control flow according to the above-described first example, a control flow according to the third example illustrated in Fig. 6 corresponds to the processing procedure that is related to the event data recording and is executed by the controller 30 and the recording processor 61, and is repeatedly executed during the activation of the recording unit 60.

In addition, step S710 and step S790 in Fig. 6 respectively correspond to initiation and termination of the control flow according to the third example illustrated in Fig. 6. Similar to the control flow according to the above-described first example, the control flow according to the third example illustrated in Fig. 6 is initiated in the state where the recording control section 321 in the controller 30 permits the event data recording by the recording processor 61.

The control flow according to the third example differs from the control flow according to the above-described first example in a point that, after it is determined YES in step S517 and the processing in step S519 is executed, processing in step S711 is further executed.

More specifically, in the control flow according to the third example illustrated in Fig. 6, in the case where it is determined that the motorcycle 100 has succeeded in being resumed from the off-ground state (step S517/YES), in step S519, the recording control section 321 in the controller 30 prohibits the event data recording by the recording processor 61.

Next, in step S711, the recording control section 321 in the controller 30 makes the recording processor 61 execute resumption success data recording for recording the partial information, which is the information acquired in the period including the shock application time at which the motorcycle 100 receives the shock, of the target information (more specifically, the image captured by the camera 63) as resumption success data that is different data from the event data. The resumption success data corresponds to information (more specifically, the image captured by the camera 63) relevant to the off-ground state, from which the motorcycle 100 has succeeded in being resumed.

For example, a part of the storage area, which is used for the event data recording, in the storage device 62 is used for the resumption success data recording. In addition to the storage area, which is used for the event data recording, in the storage device 62, a storage area, which is used for the resumption success data recording, in the storage device 62 may be prepared.

Here, from a perspective of further appropriately securing capacity of the storage area, which is used for the event data recording, in the storage device 62, data size of the resumption success data is preferably smaller than data size of the event data. For example, in regard to the resumption success data recording, after processing to reduce data size of data to be recorded as the resumption success data is executed, such data is recorded as the resumption success data. In this way, the data size of the resumption success data can be reduced to be smaller than the data size of the event data. As the processing to reduce the data size, for example, processing to thin the data, processing to shorten a period that corresponds to the partial information as the target for the resumption success data recording in comparison with a period that corresponds to the partial information as the target for the event data recording, data compression processing, or the like can be used.

As described above, in the control flow illustrated in Fig. 6, upon the selection of whether to prohibit or permit the event data recording, in the case where it is determined that the resumption from the off-ground state is succeeded, the control section 32 makes the recording processor 61 execute the resumption success data recording for recording the partial information, which is the information acquired in the period including the shock application time at which the motorcycle 100 receives the shock, as the resumption success data, which is the different data from the event data.

Referring to each of the control flows illustrated in Fig. 4 to Fig. 6, the above description has been made on the example in which, while the recording unit 60 is activated, it is repeatedly determined whether the motorcycle 100 is brought into the off-ground state, and the selection of whether to prohibit or permit the event data recording is made according to the result of the determination. However, such a determination does not always have to be repeatedly made while the recording unit 60 is activated. More specifically, the control section 32 may be switchable between control modes that are a first control mode and a second control mode. In the first control mode, it is selected whether to prohibit or permit the event data recording according to the determination result on whether the motorcycle 100 is brought into the off-ground state. In the second control mode, the event data recording is permitted without making the determination on whether the motorcycle 100 is brought into the off-ground state.

Here, from a perspective of easily switching the information to be recorded in the recording processor 61 according to the user's preference, the user preferably selects one of the above control modes. For example, the control section 32 switches the above control mode according to the user's operation input using an input device such as a button, a switch, or a touchscreen provided to the motorcycle 100. In this way, the user can select the above control mode.

### <Effects of Controller>

A description will be made on effects of the controller 30 according to the embodiment of the present invention.

The controller 30 includes the control section 32 that selects whether to prohibit or permit the event data recording in the case where it is determined that the motorcycle 100 is brought into the off-ground state where the wheel of the motorcycle 100 comes off the ground. Accordingly, it is possible to suppress the unintentional execution of the event data recording with the shock, which occurs when the motorcycle 100 is resumed from the off-ground state after being in the off-ground state, as the trigger. As a result, it is possible to suppress the capacity of the storage area, which is used for the event data recording, in the storage device 62 from being unnecessarily filled. Therefore, the desired information can appropriately be recorded in the recording unit 60 of the motorcycle 100.

Preferably, upon the selection of whether to prohibit or permit the event data recording, the control section 32 in the controller 30 prohibits the event data recording when it is determined that the resumption from the off-ground state is succeeded, and permits the event data recording when it is determined that the resumption from the off-ground state is failed. In this way, it is possible to appropriately suppress the unintentional execution of the event data recording with the shock, which occurs when the motorcycle 100 is resumed from the off-ground state after being in the off-ground state, as the trigger. At the same time, it is possible to appropriately record the information relevant to the accident as the event data in the recording unit 60.

Preferably, upon the selection of whether to prohibit or permit the event data recording, the control section 32 in the controller 30 applies the resumption success flag, which is the flag indicative of the success in the resumption, to the target information in the case where it is determined that the resumption from the off-ground state is succeeded. Accordingly, by searching for the target information, to which the resumption success flag is applied, among the target information stored in the storage device 62, the user can check the information relevant to the off-ground state, from which the motorcycle 100 has succeeded in being resumed, ex-post facto. For example, the user can check the image, which is captured by the camera 63 during the jump intentionally performed by the rider of the motorcycle 100, ex-post facto. Here, the target information, to which the resumption success flag is applied, is saved by the recording processor 61 in a state capable of being overwritten. Thus, it is possible to suppress the capacity of the storage area, which is used for the event data recording, in the storage device 62 from being filled by the target information.

Preferably, upon the selection of whether to prohibit or permit the event data recording, in the case where it is determined that the resumption from the off-ground state is succeeded, the control section 32 in the controller 30 makes the recording processor 61 execute the resumption success data recording for recording the partial information, which is the information acquired in the period including the shock application time at which the motorcycle 100 receives the shock, as the resumption success data, which is the different data from the event data. In this way, the user can check the information relevant to the off-ground state, from which the motorcycle 100 has succeeded in being resumed, ex-post facto. For example, the user can check the image, which is captured by the camera 63 during the jump intentionally performed by the rider of the motorcycle 100, ex-post facto. Here, the resumption success data is saved in the state where the information cannot basically be overwritten by the recording processor 61 or the state where the deletion thereof is restricted. Thus, it is possible to suppress the resumption success data from being overwritten by the other data or deleted.

Preferably, the data size of the resumption success data is smaller than the data size of the event data. In this way, it is possible to suppress the capacity of the storage area in the storage device 62 from being excessively filled by the resumption success data. Thus, it is possible to appropriately secure the capacity of the storage area, which is used for the event data recording, in the storage device 62.

Preferably, the control section 32 in the controller 30 can be switched between the first control mode and the second control mode as the control modes. In the first control mode, it is selected whether to prohibit or permit the event data recording according to the determination result on whether the motorcycle 100 is brought into the off-ground state. In the second control mode, the event data recording is permitted without making the determination on whether the motorcycle 100 is brought into the off-ground state. The user selects the control mode. In this way, it is possible to easily switch the information to be recorded in the recording processor 61 according to the user's preference. For example, when the user selects the second control mode as the control mode, the user can record the partial information, which is the information acquired in the period including the shock application time at which the motorcycle 100 receives the shock, in the recording unit 60 regardless of whether the shock received by the motorcycle 100 is caused by the resumption from the off-ground state or caused by the accident.

Preferably, when determining that the motorcycle 100 is brought into the jumping state where both of the wheels of the motorcycle 100 come off the ground, the control section 32 in the controller 30 determines that the motorcycle 100 is brought into the off-ground state. In this way, it is possible to suppress the unintentional execution of the event data recording with the shock, which occurs at the time of the resumption from the state where both of the wheels of the motorcycle 100 come off the ground, as the trigger.

Preferably, when determining that the motorcycle 100 is brought into the one-wheel floating state where one of the wheels of the motorcycle 100 contacts the ground while the other wheel comes off the ground, the control section 32 in the controller 30 determines that the motorcycle 100 is brought into the off-ground state. In this way, it is possible to suppress the unintentional execution of the event data recording with the shock, which occurs at the time of the resumption from the state where only one of the wheels of the motorcycle 100 comes off the ground, as the trigger.

Preferably, the recording processor 61 acquires the image, which is captured by the camera 63 mounted to the motorcycle 100, as the target information as the recording target. In this case, the data size of the information recorded by the recording processor 61 is particularly increased. For example, the data size of the information recorded by the recording processor 61 in this case is increased in comparison with the case where the output from the various types of the equipment mounted to the motorcycle 100 is acquired as the target information by the recording processor 61. Accordingly, a possibility that it becomes difficult to appropriately record the desired information in the recording unit 60 due to shortage of the capacity of the storage area in the storage device 62 becomes prominent. Thus, in the case where the recording processor 61 acquires the image, which is captured by the camera 63, as the target information and it is determined that the motorcycle 100 is brought into the off-ground state, it is selected whether to prohibit or permit the event data recording. In this way, it is possible to effectively exert an effect capable of appropriately recording the desired information in the recording unit 60 of the motorcycle 100.

The present invention is not limited to each of the embodiments that have been described. For example, all or parts of the embodiments may be combined, or only a part of each of the embodiments may be implemented.

### Reference Signs List

- 1:: Trunk
- 2:: Handlebar
- 3:: Front wheel
- 4:: Rear wheel
- 30:: Controller
- 31:: Acquisition section
- 32:: Control section
- 41:: Inertial measurement unit
- 42:: Front-wheel rotational frequency sensor
- 43:: Rear-wheel rotational frequency sensor
- 44:: Front stroke sensor
- 45:: Rear stroke sensor
- 60:: Recording unit
- 61:: Recording processor
- 62:: Storage device
- 63:: Camera
- 64:: Microphone
- 65:: Acceleration sensor
- 100:: Motorcycle
- 321:: Recording control section
- 322:: Determination section

## Claims

1. A controller (30) for controlling recording of information by a recording processor (61) of a straddle-type vehicle (100), wherein
the recording processor (61)
continuously acquires target information as a recording target, and
can execute event data recording for recording partial information, which is information acquired in a period including a shock application time at which the straddle-type vehicle (100) receives a shock, of the target information as event data, and
the controller (30) includes a control section (32) that selects whether to prohibit or permit the event data recording in the case where it is determined that the straddle-type vehicle (100) is brought into an off-ground state where a wheel of the straddle-type vehicle (100) comes off the ground.

2. The controller according to claim 1, wherein
upon making the selection, the control section (32) prohibits the event data recording when it is determined that resumption from the off-ground state is succeeded, and permits the event data recording when it is determined that the resumption from the off-ground state is failed.

3. The controller according to claim 2, wherein
upon making the selection, the control section (32) applies a resumption success flag, which is a flag indicative of a success in the resumption, to the target information in the case where it is determined that the resumption from the off-ground state is succeeded.

4. The controller according to claim 2 or 3, wherein upon making the selection, the control section (32) makes the recording processor (61) execute resumption success data recording for recording the partial information as resumption success data that is different data from the event data when it is determined that the resumption from the off-ground state is succeeded.

5. The controller according to claim 4, wherein
data size of the resumption success data is smaller than data size of the event data.

6. The controller according to any one of claims 1 to 5, wherein
the control section (32) can be switched between control modes that are a first control mode in which the selection is made according to a determination result on whether the straddle-type vehicle (100) is brought into the off-ground state, and a second control mode in which the event data recording is permitted without determining whether the straddle-type vehicle (100) is brought into the off-ground state, and
the control mode is selected by a user.

7. The controller according to any one of claims 1 to 6, wherein
when determining that the straddle-type vehicle (100) is brought into a jumping state where both of the wheels of the straddle-type vehicle (100) come off the ground, the control section (32) determines that the straddle-type vehicle (100) is brought into the off-ground state.

8. The controller according to any one of claims 1 to 7, wherein
when determining that the straddle-type vehicle (100) is brought into a one-wheel floating state where one of the wheels of the straddle-type vehicle (100) contacts the ground while the other one of the wheels comes off the ground, the control section (32) determines that the straddle-type vehicle (100) is brought into the off-ground state.

9. The controller according to any one of claims 1 to 8, wherein
the recording processor (61) acquires an image, which is captured by the camera (63) mounted to the straddle-type vehicle (100), as the target information.

10. A control method for controlling recording of information by a recording processor (61) of a straddle-type vehicle (100) using a controller (30), wherein
the recording processor (61)
continuously acquiring target information as a recording target, and
capable of executing event data recording for recording partial information, which is information acquired in a period including a shock application time at which the straddle-type vehicle (100) receives a shock, of the target information as event data, the method comprising:
selecting whether to prohibit or permit the event data recording by a control section (32) in the controller (30) in the case where it is determined that the straddle-type vehicle (100) is brought into an off-ground state where a wheel of the straddle-type vehicle (100) comes off the ground.
